# EUROPÄISCHE PATENTSCHRIFT

(11) **EP 2 559 662 B1**
(45) Veröffentlichungstag und Bekanntmachung des Hinweises auf die Patenterteilung: **04.03.2015**
(21) Anmeldenummer: 12005581.9
(22) Anmeldetag: 01.08.2012
(51) Int. Cl.: C02F 1/00, B01D 35/143

(54) **Wasserfilterkanne**
Carafe filtrante pour l'eau
Water filter jug

(30) Priorität: 17.08.2011 DE 102011110470
(43) Veröffentlichungstag der Anmeldung: 20.02.2013
(73) Patentinhaber: Aquis Wasser-Luft-Systeme GmbH, Lindau, 9445 Rebstein (CH)
(72) Erfinder: Malsy, Jürgen, 9055 Bühler (CH)
(74) Vertreter: Roth, Klaus

(56) Entgegenhaltungen:
- WO-A1-2007/090622

## Beschreibung

Die Erfindung betrifft eine Wasserfilterkanne mit Zähleinheit nach dem Oberbegriff des Anspruchs 1.

### Stand der Technik

Wasserfilterkannen sind bereits in einer Vielzahl von Schriften bekannt geworden und in verschiedenen Ausführungen im Handel erhältlich.

In der Druckschrift DE 197 31 092 A1 ist beispielsweise eine Wasserfilterkanne beschrieben, bei der zum Befüllen des Trichters der Deckel abgehoben wird. Hierbei wird über einen Reedschalter eine Zähleinheit im Deckel betätigt, wobei das Abheben des Deckels mit einem Füllvorgang gleichgesetzt und hieraus die Erschöpfung der verwendeten Filterkartusche bestimmt und angezeigt werden soll.

In der DE 695 228 33 ist eine Ausführung beschrieben, bei der eine Füllöffnung mittels eines Schiebers verschlossen wird. Der Schieber erstreckt sich unterhalb einer Deckelplatte in einer Führung. Darüber hinaus ist eine mechanische Zähleinheit in dieser Druckschrift veröffentlicht.

In der Druckschrift EP 17 274 49 wiederum ist eine Variante offenbart, bei der eine Einfüllöffnung des Deckels durch ein wippenartiges Verschlusselement verschlossen wird. Diese Wippe ist durch Ausgleichgewichte so ausgelegt, dass im Normalfall die Einfüllöffnung selbsttätig verschlossen ist und diese durch den Wasserstrahl des zu füllenden Wassers geöffnet wird.

In der Druckschrift EP 20 81 475 B1 ist eine weitere Variante mit einem wippenartigen Verschlusselement beschrieben, die zusätzlich eine Zähleinheit umfasst. Die Wippe wird wiederum durch das einzufüllende Wasser betätigt, wobei über einen Magneten am Ende der Wippe ein Detektor aktiviert wird, der die Bewegungen der Wippe erfasst. Aus den Öffnungsvorgängen dieses wippenartigen Verschlusselementes wird wiederum auf die Füllvorgänge und den Zustand der Filterkartusche zurück geschlossen.

Aufgabe der Erfindung ist es, eine verbesserte Wasserfilterkanne vorzuschlagen, bei der eine einfache Deckelgestaltung und eine manuelle Betätigung des Verschlusses ermöglicht ist.

Diese Aufgabe wird ausgehend von einer Wasserfilterkanne nach dem Oberbegriff durch die kennzeichnenden Merkmale des Anspruchs 1 gelöst.

Durch die in den Unteransprüchen genannten Maßnahmen sind die vorteilhaften Ausführungen und Weiterbildungen in der Erfindung möglich.

Dementsprechend zeichnet sich eine erfindungsgemäße Wasserfilterkanne dadurch aus, dass das Betätigungselement und das Verschlusselement jeweils wenigstens einen Magneten umfassen, sodass das Öffnen und Schließen des Verschlusselementes durch eine Lageänderung des wenigstens einem Magneten bei Betätigung des Betätigungselementes auslösbar ist.

Der Aufbau eines solchen Deckels kann besonders einfach ausgebildet sein, da durch die Verwendung von Magneten keine gegenständliche Verbindung zwischen dem Betätigungselement und dem Verschlusselement erforderlich ist. Gegebenenfalls kann zwischen beiden Elementen sogar eine Wand liegen, durch die die Magnetkraft hindurch wirken kann. Durch die Erfindung kann eine leicht zu reinigende Oberfläche ohne schmutzanfällige Führungsspalten, Durchbrüche oder dergleichen gestaltet werden.

Vorzugsweise wird dabei wenigstens ein Permanentmagnet vorgesehen, um die magnetische Funktion dauerhaft und zuverlässig sicherzustellen.

In einer vorteilhaften Ausführung wird zusätzlich eine Zähleinheit zur Zählung der Füllvorgänge der Wasserkanne vorgesehen, so dass eine Anzeige des Filterzustandes und insbesondere auch ein fälliger Filterwechsel festgestellt und mit einer Anzeige angezeigt werden können.

Vorzugsweise ist die Zähleinheit durch ein zur manuellen Betätigung vorgesehenes Betätigungselement betätigbar. Dabei kann, der Zähler und das Betätigungselement oberhalb des Deckels angeordnet sein. Das Verschlusselement wird dabei vorteilhafterweise unterhalb des Deckels angeordnet und durch die Magnetkraft derart beeinflusst, dass das Öffnen und Schließen des Verschlusselementes mittels der manuellen Betätigung des gleichen Betätigungselementes auslösbar ist.

Hierdurch ist sichergestellt, dass durch die Verwendung eines manuell bedienbaren Betätigungselementes tatsächlich nur beim Füllvorgang gezählt wird, sodass zuverlässig die entsprechende Zählung vorgenommen werden kann.

Wie o.a. wird vorzugsweise wenigstens ein Permanentmagnet im Betätigungselement und/oder in dem Verschlusselement vorgesehen. Auch ein oder mehrere Elemente aus magnetisierbarem Material wie Weicheisen oder dergleichen können als erfindungsgemäßer Magnet zum Einsatz kommen. Durch die Bewegung solcher magnetischer Elemente zugleich mit der Bewegung des Betätigungselementes kann eine entsprechende Anziehung verstärkt oder verringert werden, sodass hierdurch die gewünschte Stellung des Verschlusselementes erzielbar ist.

In einer anderen Ausführungsform wird nur ein Permanentmagnet entweder im Betätigungselement oder im Verschlusselement vorgesehen, wobei das jeweils andere Element im Verschlusselement mit einem magnetisierbaren Material, beispielsweise Weicheisen oder dergleichen ausgestattet ist. Durch eine solche Ausgestaltung lassen sich ebenso Anziehungs- oder Abstoßungskräfte bewirken und im erfindungsgemäßen Sinne beeinflussen.

Durch einen im Betätigungselement angeordneten Permanentmagneten oder durch ein darin befindliches magnetisierbares Material kann zugleich mit dem Öffnen oder Schließen des Verschlusselementes die oben angegebene Zähleinheit aktiviert werden. Auf diese Weise kann beispielsweise eine Zähleinheit als in sich geschlossene Baueinheit ausgeführt werden, wobei in dieser Baueinheit ein Magnetschalter integriert sein kann, der durch die Annäherung oder die Entfernung eines im Betätigungselement angeordneten Magneten aktiviert oder deaktiviert wird. Auch ein sonstiger Sensor, z. B. ein Näherungsschalter oder dergleichen wäre in einer anderen Ausführungsform verwendbar. Dabei kann ein separater Magnet eigens für die Zähleinheit im Betätigungselement vorgesehen werden. Zu einer anderen Ausführung wird ein für das Verschlusselement vorgesehener Magnet zugleich für den Zählvorgang verwendet.

Im Übrigen lässt sich auch ein mittels des Betätigungselementes aktivierbarer mechanischer Zähler mit einem mechanisch betätigten Verschlusselement gemäß der Erfindung kombinieren.

In einer weiterführenden Variante kann der mechanische Zähler auch durch rein mechanische Kraft bei Bewegung des Betätigungselementes aktiviert werden, z. B. durch Weiterschaltung eines Rastelements durch Verschiebung des Betätigungselementes.

In einer besonderen Ausführungsform der Erfindung wird das Verschlusselement wippenförmig ausgebildet. Ein Verschlusselement als Wippe ist konstruktiv besonders einfach herstellbar. Darüber hinaus kann bei einer Wippe durch entsprechende Ausgestaltung der Hebelverhältnisse eine Anpassung an die vorgesehenen einwirkenden Kräfte zum Schließen und Öffnen der Wippe erfolgen. Bei einer Wippe ist zudem ein Verkanten im Vergleich zu einem Schieber oder dergleichen leichter auszuschließen, da eine Wippe leicht drehbar gelagert werden kann.

In einer Weiterführung der Erfindung werden zwei Magnete oder magnetisierbare Elemente beidseits der Drehachse der Verschlusswippe angeordnet. Durch Verschieben eines korrespondierenden magnetischen oder magnetisierbaren Elementes kann sodann die jeweilige Stellung des wippenartigen Verschlusselementes angewählt werden. Wird auf der Seite der Verschlussfläche des Verschlusselementes ein Magnet oder magnetisierbares Material angezogen, wird dabei die Einfüllöffnung verschlossen, während auf der gegenüberliegenden Seite der Drehachse die Wippe derart betätigt wird, dass die Einfüllöffnung geöffnet ist.

Die Hebel- und/oder Gewichtsverhältnisse eines solchen wippenförmigen Verschlusselementes müssen dabei nicht exakt auf eine gewünschte Endstellung austariert sein, es genügt vielmehr, wenn durch die Krafteinwirkung des oder der Magnete die entsprechende Stellkraft aufgebracht werden kann.

Ein Ausführungsbeispiel der Erfindung ist in der Zeichnung dargestellt und wird anhand der Figuren nachfolgend näher erläutert:

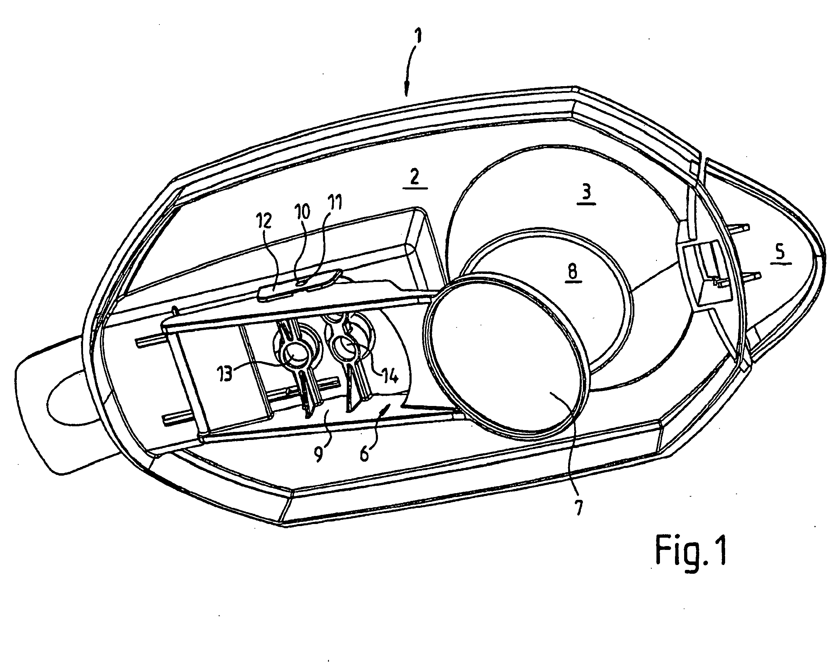

Im Einzelnen zeigen
- Figur 1: eine perspektivische Ansicht von unten auf den Deckel einer Filterkanne,

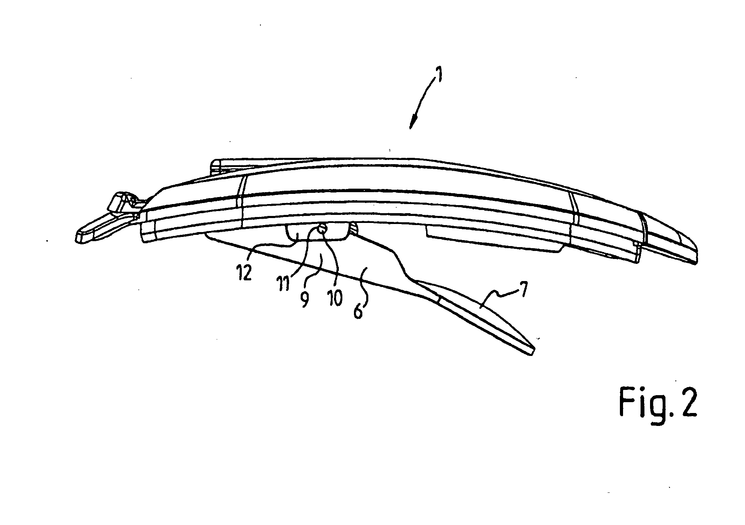

- Figur 2: eine Seitenansicht eines Deckels gemäß Figur 1,

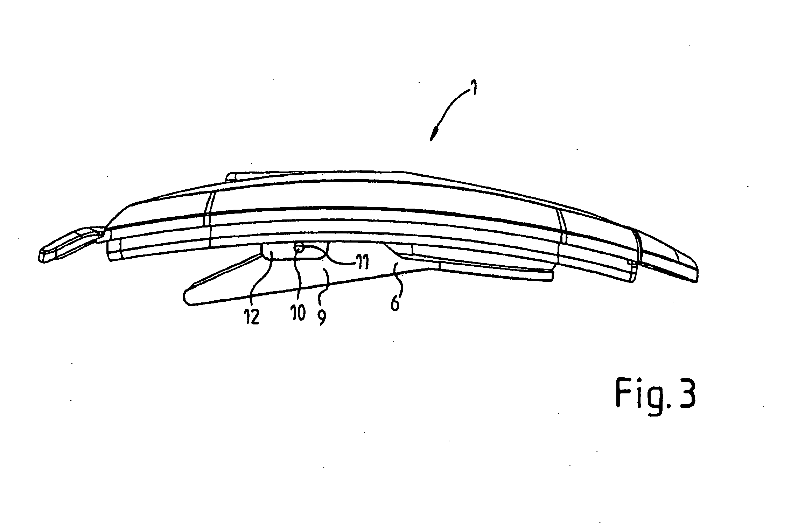

- Figur 3: eine Seitenansicht entsprechend Figur 2 mit geschlossenem Verschlusselement und
- Figur 4: eine schematische perspektivische Schnittdarstellung eines Deckels einer erfindungsgemäßen Wasserfilterkanne in geschlossener Stellung sowie
- Figur 5: eine Figur 4 entsprechende Darstellung in geöffneter Stellung.

Eine erfindungsgemäße Wasserfilterkanne wird mit einem Deckel 1 gemäß den Figuren versehen, der im Wesentlichen eine durchgehende Trennwand 2 umfasst, in die ein Einfülltrichter 3 sowie eine Schiebeaufnahme 4 eingeformt ist. Weiterhin ist ein Schwenkdeckel 5 zur Abdeckung einer Auslauftülle einer Filterkanne in bekannter Weise vorgesehen.

Auf der Unterseite der Trennwand 2 ist ein Verschlusselement 6 angeordnet, das als Wippe ausgebildet ist. Das Verschlusselement 6 umfasst eine Schließplatte 7, die die Einfüllöffnung 8 des Einlauftrichters 3 verschließt oder öffnet. An die Schließplatte 7 schließt sich eine Schwinge 9 an, die über Lagerzapfen 10 in entsprechenden Lageröffnungen 11 zweier Lagerstege 12 gelagert ist, die an die Trennwand 2 angeformt sind.

Die Schwinge 9 des Verschlusselementes 6 umfasst zwei Aufnahmen 13, 14 für magnetische oder magnetisierbare Elemente.

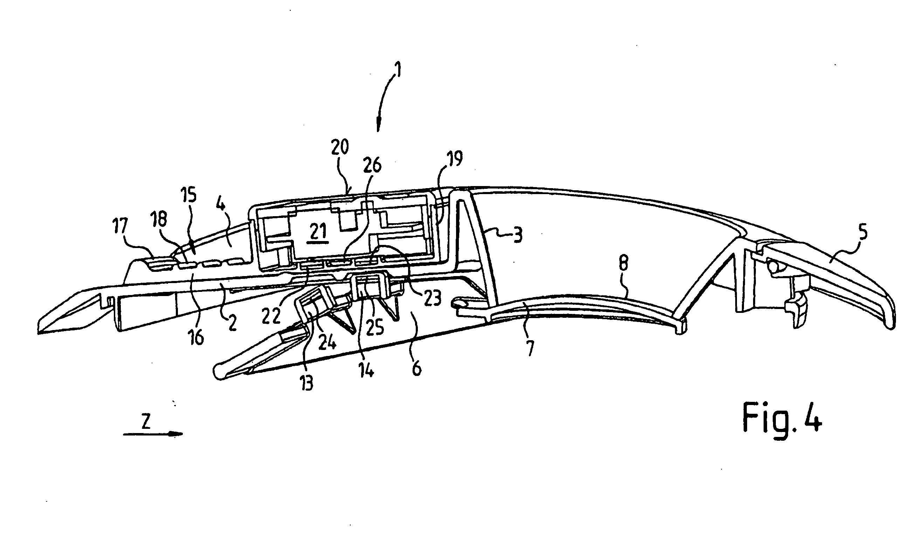

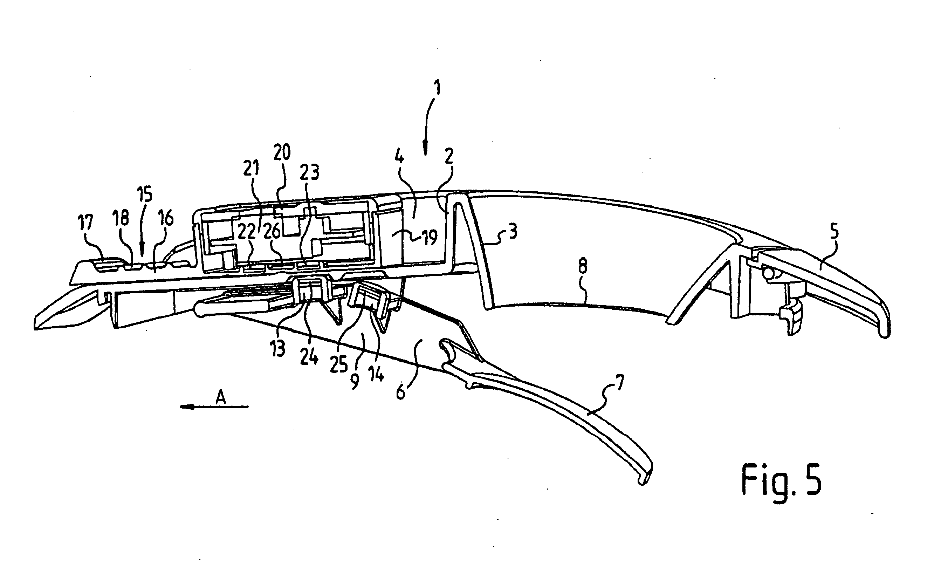

Wie in den Figuren 4 und 5 besonders gut erkennbar ist, ist auf der Oberseite der Trennwand in der Schiebeaufnahme 4 ein Betätigungselement 15 angeordnet, das als Schieber ausgebildet ist. Das Betätigungselement 15 umfasst dabei einen Betätigungsabschnitt 16 an dessen Oberseite Haftstrukturen 17, 18 für den Daumen einer bedienenden Person angebracht sind. Darüber hinaus umfasst das Betätigungselement ein Gehäuse 19, das durch ein Display 20 als Deckel verschlossen ist und die Zähleinheit 21 aufnimmt.

Figur 4 zeigt die Stellung des Betätigungselementes 15 für die geschlossene Stellung des Verschlusselementes 6. Figur 5 zeigt die geöffnete Stellung.

Im Bodenbereich des Gehäuses 19 sind zwei Magnete oder magnetisierbare Elemente 22, 23 befestigt. Im Folgenden wird von einer Ausführung ausgegangen, bei der Permanentenmagnete 22,23 vorgesehen sind. Wie bereits oben erwähnt, können jedoch auch anderweitige Kombinationen von Magneten und magnetisierbaren Materialien Verwendung finden, sofern nur eine vergleichbare Krafteinwirkung zum Öffnen und Schließen des Verschlusselementes bewirkt werden.

Beidseits der Lagerzapfen 10 sind weiterhin auf Seiten des Verschlusselementes Magnete oder magnetisierbare Elemente 24, 25 angeordnet, wobei im Folgenden von einer Ausführung ausgegangen wird, in der Permanentmagnete 24, 25 Verwendung finden.

Zwischen den Magneten 22, 23 des Betätigungselementes 15 ist zudem ein Magnetschalter, beispielsweise ein Reedschalter 26 angeordnet.

Die Magnete 23 und 25 sind so gepolt, dass sie sich anziehen, wenn sie übereinander liegen. Dies ist in Figur 4 erkennbar, in der sich beide Magnete unmittelbar gegenüberliegen.

Die Magnete 22, 24 werden in der dargestellten Ausführungsform bevorzugt so gepolt, dass sie sich abstoßen. Durch eine Abstoßung zwischen diesen beiden Magneten 22,24 wird die Anziehung zwischen den Magneten 23, 25 unterstützt, sodass zuverlässig die geschlossene Position des Verschlusselementes 6 gemäß Figur 4 erzielbar ist.

Bei Verschiebung des Betätigungselementes 15 in Richtung A beim Öffnen des Verschlusselementes 6 wird der Magnet 23 vom Magnet 25 wegbewegt und ist sodann in der Lage, den Magnet 24 anzuziehen. Der Magnet 22, der gegenüber dem Magnet 23 entgegengesetzt gepolt ist, ist hierbei weit vom Magnet 24 beabstandet.

Die Anziehung zu den Magneten 23, 24 kann zudem durch eine entsprechende Gewichts- und Hebelverteilung im Verschlusselement 6 unterstützt werden.

Nach dem Befüllen der Filterkanne durch die Einfüllöffnung 8 wird das Betätigungselement 15 wieder in Schließstellung Richtung Z verschoben, wodurch sich wieder die Stellung gemäß Figur 4 ergibt.

Durch die Veränderung des Magnetfeldes im Bereich des Magnetschalters 26 können die Betätigungen des Betätigungselementes 16 durch die Zähleinheit 21 erfasst und aufgezeichnet werden.

Nach einer bestimmten Anzahl von Zählvorgängen kann sodann über das Display 20 der erforderliche Wechsel einer Filterkartusche angezeigt werden.

Das beschriebene Ausführungsbeispiel zeigt deutlich, dass ein Deckel 1 für eine erfindungsgemäße Filterkanne sehr einfach mithilfe einer einzigen durchgehenden Trennwand 2 mit entsprechender Formgebung hergestellt werden kann. Es sind keinerlei Durchbrüche für das Betätigungselement 15 erforderlich.

Die Zähleinheit 21 kann somit gegenüber der wasserführenden Kanne zuverlässig wasserdicht untergebracht werden. Das Verschlusselement 6 ist zum einen konstruktiv einfach herstellbar und entsprechend leicht, beispielsweise im Spritzgussverfahren herstellbar und durch Eindrücken zwischen die Lagerstege 12 auch leicht montierbar.

Um einen Zählvorgang zu aktivieren muss das Betätigungselement 15 aktiv in die offene und wieder zurück in die geschlossene Stellung des Deckels 1 gebracht werden, sodass nur manuell ausgelöste Füllzyklen gezählt werden. Im Falle eines versehentlichen Eindrückens der Schließplatte 7 und somit des Verschwenkens des Verschlusselementes 6 ohne Verschiebung des Betätigungselementes 15 wird kein Füllvorgang gezählt. Somit ist die Erfassung der Füllvorgänge zuverlässig gewährleistet.

Im beschriebenen Ausführungsbeispiel wurde die Zähleinheit und der Magnetschalter mit dem Betätigungselement verschoben. Ebenso könnte die Zähleinheit und der Magnetschalter fest am Deckel angebracht sein und nur das Betätigungselement mit einem oder mehreren magnetischen Elementen verschoben werden. In diesem Fall kann der Magnetschalter auch durch ein oder mehrere magnetische Elemente des Betätigungselementes ausgelöst werden.

### Bezugszeichenliste:

- 1: Deckel
- 2: Trennwand
- 3: Einfülltrichter
- 4: Schiebeaufnahme
- 5: Schwenkdeckel
- 6: Verschlusselement
- 7: Schließplatte
- 8: Einfüllöffnung
- 9: Schwinge
- 10: Lagerzapfen
- 11: Lageröffnung
- 12: Lagersteg
- 13: Aufnahme
- 14: Aufnahme
- 15: Betätigungselement
- 16: Betätigungsabschnitt
- 17: Haftstruktur
- 18: Haftstruktur
- 19: Gehäuse
- 20: Display
- 21: Zähleinheit
- 22: Magnet
- 23: Magnet
- 24: Magnet
- 25: Magnet
- 26: Magnetschalter

## Patentansprüche

1. Wasserfilterkanne mit einem Deckel (1), wobei der Deckel (1) eine Einfüllöffnung (8) mit einem Verschlusselement (6) aufweist, das durch ein zur manuellen Betätigung vorgesehenes Betätigungselement (15) betätigbar ist, **dadurch gekennzeichnet, dass** das Betätigungselement (15) und das Verschlusselement (6) jeweils wenigstens einen Magneten (22, 23, 24, 25) umfassen, sodass das Öffnen und Schließen des Verschlusselementes (6) durch eine Lageänderung wenigstens eines Magneten bei Betätigung des Betätigungselementes (15) auslösbar ist.

2. Wasserfilterkanne nach Anspruch 1, **dadurch gekennzeichnet, dass** wenigstens ein Permanentenmagnet (22, 23, 24, 25) im Betätigungselement und/oder im Verschlusselement vorgesehen ist.

3. Wasserfilterkanne nach einem der vorgenannten Ansprüche, **dadurch gekennzeichnet, dass** eine Zähleinheit (21) für die Zählung der Anzahl der Füllvorgänge im Deckel (1) vorgesehen ist.

4. Wasserfilterkanne nach einem der vorgenannten Ansprüche, **dadurch gekennzeichnet, dass** eine magnetisch aktivierbare Zähleinheit (21) für die Zählung der Anzahl der Füllvorgänge im Deckel (1) vorgesehen ist.

5. Wasserfilterkanne nach einem der vorgenannten Ansprüche, **dadurch gekennzeichnet, dass** eine mechanisch betätigbare Zähleinheit (21) für die Zählung der Anzahl der Füllvorgänge im Deckel (1) vorgesehen ist.

6. Wasserfilterkanne nach einem der vorgenannten Ansprüche, **dadurch gekennzeichnet, dass** wenigstens ein Magnet zugleich für die Betätigung des Verschlusselementes (6) und zur Auslösung der Zähleinheit (21) vorgesehen ist.

7. Wasserfilterkanne nach einem der vorgenannten Ansprüche, **dadurch gekennzeichnet, dass** ein separater, nicht auf das Verschlusselement wirkender Magnet für die Zähleinheit (21) vorgesehen ist.

8. Wasserfilterkanne nach einem der vorgenannten Ansprüche, **dadurch gekennzeichnet, dass** das Verschlusselement als Wippe ausgebildet ist.

9. Wasserfilterkanne nach einem der vorgenannten Ansprüche, **dadurch gekennzeichnet, dass** das Verschlusselement (6) im Gleichgewichtszustand bei stehender Wasserfilterkanne ohne äußere Krafteinwirkung geöffnet und durch das Betätigungselementes (15) magnetisch schließbar ist.

10. Wasserfilterkanne nach einem der vorgenannten Ansprüche, **dadurch gekennzeichnet, dass** das Verschlusselement (6) im Gleichgewichtszustand bei stehender Filterkanne ohne äußere Krafteinwirkung geschlossen und durch das Betätigungselementes (15) magnetisch zu öffnen ist.

11. Wasserfilterkanne nach einem der vorgenannten Ansprüche, **dadurch gekennzeichnet, dass** das Betätigungselement (15) als Schieber ausgebildet und in dem Deckel (1) eine Schiebeaufnahme vorgesehen ist.

## Claims

1. A water filter jug with a lid (1), wherein the lid (1) has a filling opening (8) with a closure element (6), which can be actuated by an actuation element (15) provided for manual actuation, **characterized in that** the actuation element (15) and the closure element (6) comprise in each case at least one magnet (22, 23, 24, 25), so that the opening and closing of the closure element (6) can be triggered by a change in position of at least one magnet with the actuation of the actuation element (15).

2. A water filter jug according to claim 1, **characterized in, that** at least one permanent magnet (22, 23, 24, 25) is provided in the actuation element and/or in the closure element.

3. A water filter jug according to one of the aforementioned claims, **characterized in, that** a counting unit (21) is provided in the lid (1) for counting the number of filling operations.

4. A water filter jug according to one of the aforementioned claims, **characterized in, that** a magnetically activatable counting unit (21) is provided in the lid (1) for counting the number of filling operations.

5. A water filter jug according to one of the aforementioned claims, **characterized in, that** a mechanically operable counting unit (21) is provided in the lid (1) for counting the number of filling operations.

6. A water filter jug according to one of the aforementioned claims, **characterized in, that** at least one magnet is provided at the same time for actuating the closure element (6) and for triggering the counting unit (21).

7. A water filter jug according to one of the aforementioned claims, **characterized in, that** a separate magnet not acting on the closure element is provided for the counting unit (21).

8. A water filter jug according to one of the aforementioned claims, **characterized in, that** the closure element is designed as a rocker.

9. A water filter jug according to one of the aforementioned claims, **characterized in, that** the closure element (6) is opened in the state of equilibrium in the case of a standing filter jug without the impact of external force and can be closed magnetically by the actuation element (15).

10. A water filter jug according to one of the aforementioned claims, **characterized in, that** the closure element (6) is closed in the state of equilibrium in the case of a standing filter jug without the impact of external force and must be opened magnetically by the actuation element (15).

11. A water filter jug according to one of the aforementioned claims, **characterized in, that** the actuation element (15) is designed as a slide and that there is provided a slide receptacle in the lid (1).

## Revendications

1. Pot à eau à filtre avec un couvercle (1), le couvercle (1) comprenant une ouverture de remplissage (8) avec un élément de fermeture (6), qui peut être actionné par un élément d'actionnement (15) prévu pour l'actionnement manuel, **caractérisé en ce que** l'élément d'actionnement (15) et l'élément de fermeture (6) comprennent chacun au moins un aimant (22, 23, 24, 25), de façon à ce que l'ouverture et la fermeture de l'élément de fermeture (6) puissent être déclenchées par une modification de la position d'au moins un aimant lors de l'actionnement de l'élément d'actionnement (15).

2. Pot à eau à filtre selon la revendication 1, **caractérisé en ce qu'**au moins un aimant permanent (22, 23, 24, 25) est prévu dans l'élément d'actionnement et/ou l'élément de fermeture.

3. Pot à eau à filtre selon l'une des revendications précédentes, **caractérisé en ce qu'**une unité de comptage (21) est prévu pour le comptage du nombre de processus de remplissage dans le couvercle (1).

4. Pot à eau à filtre selon l'une des revendications précédentes, **caractérisé en ce qu'**une unité de comptage (21) activable magnétiquement est prévue pour le comptage du nombre de processus de remplissage dans le couvercle (1).

5. Pot à eau à filtre selon l'une des revendications précédentes, **caractérisé en ce qu'**une unité de comptage (21) actionnable mécaniquement est prévue pour le comptage du nombre de processus de remplissage dans le couvercle (1).

6. Pot à eau à filtre selon l'une des revendications précédentes, **caractérisé en ce qu'**au moins un aimant est prévu en même temps pour l'actionnement de l'élément de fermeture (6) et pour le déclenchement de l'unité de comptage (21).

7. Pot à eau à filtre selon l'une des revendications précédentes, **caractérisé en ce qu'**un aimant séparé n'agissant pas sur l'élément de fermeture est prévu pour l'unité de comptage (21).

8. Pot à eau à filtre selon l'une des revendications précédentes, **caractérisé en ce que** l'élément de fermeture est conçu comme une bascule.

9. Pot à eau à filtre selon l'une des revendications précédentes, **caractérisé en ce que** l'élément de fermeture (6) est ouvert en état d'équilibre sans application de force extérieure lorsque le pot à eau à filtre est debout et peut être fermé magnétiquement à l'aide de l'élément d'actionnement (15).

10. Pot à eau à filtre selon l'une des revendications précédentes, **caractérisé en ce que** l'élément de fermeture (6) est fermé en état d'équilibre sans application de force extérieure lorsque le pot à eau à filtre est debout et peut être ouvert magnétiquement à l'aide de l'élément d'actionnement (15).

11. Pot à eau à filtre selon l'une des revendications précédentes, **caractérisé en ce que** l'élément d'actionnement (15) est conçu comme un tiroir et, dans le couvercle (1), est prévu un logement de tiroir.
